# EUROPEAN PATENT SPECIFICATION

(11) **EP 2 071 956 B1**
(45) Date of publication and mention of the grant of the patent: **29.05.2013**
(21) Application number: 08022022.1
(22) Date of filing: 18.12.2008
(51) Int. Cl.: A21C 11/00

(54) **Machine and line for processing dough**
Maschine und Verarbeitungsstrecke für Teig
Machine et ligne de traitement de pâte

(30) Priority: 21.12.2007 IT VI20070324
(43) Date of publication of application: 24.06.2009
(73) Proprietor: Iteca S.p.A., 37050 Palù (VR) (IT)
(72) Inventor: Benetti, Luigi, 37031 Illasi (Verona) (IT)
(74) Representative: Autuori, Angelo

(56) References cited:
- WO-A1-2006/129759
- US-A- 1 790 943
- US-B1- 6 398 539

## Description

### Field of invention

The present invention finds application in food machinery, and particularly relates to a machine for processing dough, particularly for spreading dough into disks, such as pizza bases or the like.

The invention further relates to a dough processing line comprising such a machine.

### Background art

As is known, industrial lines for forming dough disks, such as pizza bases or the like, typically comprise one or more processing stations in succession to perform a number of processing steps of dough portions initially having a spherical or hemispherical shape.

Typically, such lines include one or more processing stations for carrying out a spreading step on the previously pressed dough, which is required to cause it to reach the desired diameter and thickness.

Spreading is performed by one or more heads that are vertically handled to operate on the dough while the latter lies still on a belt conveyor in a preset position.

As a rule, prior art spreading machines have a single spreading head which operates on one dough at a time, in a substantially discontinuous manner. Accordingly, the forming lines that incorporate such spreading stations have a very poor throughput, and it is very difficult to coordinate the production rates of the individual stations with the rate of the whole line.

Furthermore, while the spreading machines are capable of simultaneous operation, they are still operatively independent of and not synchronized with each other. Therefore, in order to prevent the input or output products from building up at the loading and unloading areas respectively of each machine, there is the need for intermediate magazines or loading and unloading stations for each of such machines, with an often unacceptable increase of industrial costs.

Another serious drawback is the excessive overall bulk of these lines, which makes installation difficult or limits the number of spreading machines that can be installed, thereby limiting maximum throughput.

Finally, each of the spreading machines in use requires its own power supply, thereby involving increased power consumption, and affecting cost effectiveness of the production process.

From WO 2006/129759 and US 6398539 machines are known having all the features of the preamble of claim 1.

### Disclosure of the invention

The object of the present invention is to overcome the above drawbacks, by providing a dough processing machine that is highly efficient and relatively cost-effective.

A particular object is to provide a dough processing machine having a plurality of rotating processing head which have synchronized movements and particularly substantially coincident angular velocities, to ensure high uniformity of the processed products.

Another object of the present invention is to provide a machine that has a very simple construction, allowing for minimized bulk and considerably increased throughput as compared with a prior art machine with as many processing heads.

Yet another object is to provide a dough processing machine and line, which afford remarkable power savings as compared with prior art processing machines and lines with the same throughput.

These and other purposes, as more clearly explained hereafter, are fulfilled by a machine for processing dough as defined in claim 1.

Due to this feature, the processing machine of the invention will be able of driving potentially countless processing heads in a wholly synchronized manner.

Thus, a very large number of dough portions may be processed at the same time, while providing output products with substantially uniform physical characteristics.

Thus the rotary movements of the heads will be synchronized by supplying power to a single motor, which provides a machine having a relatively simplified construction and low power consumption.

According to another aspect, the invention provides a line for processing dough, particularly for forming dough disks, as defined in claim 16.

Thus, the processing line will have a much smaller size, a much lower power consumption as compared with a prior art line with as many processing heads, and will be characterized by a much higher throughput.

Advantageous embodiments of the invention will be defined in accordance with the independent claims.

### Brief description of the drawings

Further characteristics and advantages of the invention will be more apparent from the detailed description of a preferred, non-exclusive embodiment of a machine of the invention, which is described as a non-limiting example with the help of the annexed drawings, in which:
FIG. 1 is a side view of a line of the invention;
FIG. 2 is a perspective view of a machine of the invention, with certain parts being omitted for a clearer vision of the kinematic connection;
FIG. 3 is a front view of the machine of Fig. 2;
FIG. 4 is a top view of a detail of Fig. 2, showing some processing heads;
FIG. 5 is a perspective view of a processing head that is part of a machine of the invention.

### Detailed description of a preferred embodiment

Referring to the above figures, the machine of the invention, generally designated by numeral 1, may be advantageously used for forming dough disks, such as pizza bases or the like.

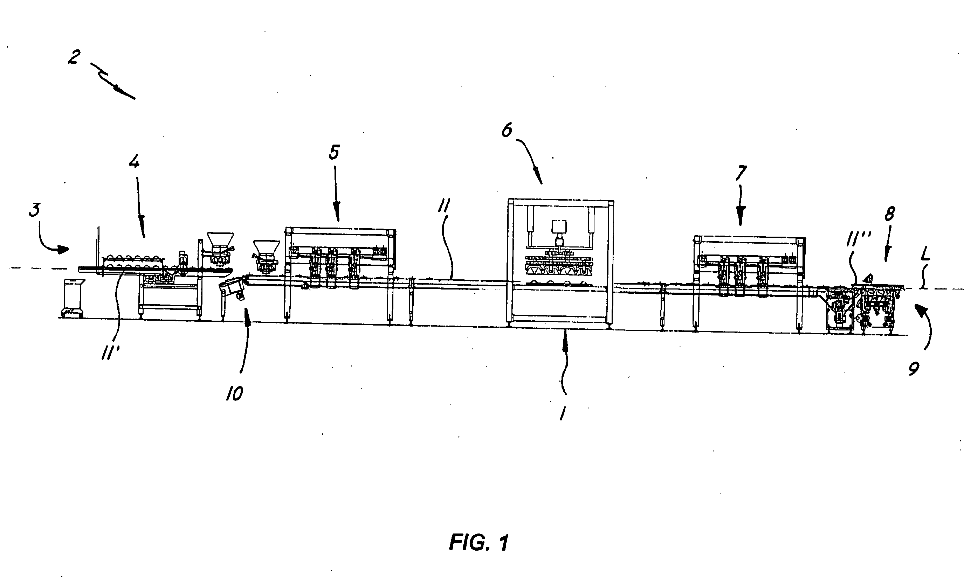

Particularly, the machine 1 may be integrated in a common dough processing line, as schematically shown in Fig. 1 and generally designated by numeral 2, which comprises an input 3 for a plurality of dough portions P, P', P'', ..., one or more processing stations 4, 5, 6, 7, 8, an output 9 for the processed dough portions P, P', P'', ..., means 10 for feeding the dough portions P, P', P'', ..., from the input 3 to the output 9, which may include one or more belt conveyors or a roller bed 11, 11', 11'' of known type.

The line 2 may be particularly suitable for forming dough disks, such as pizza bases or the like, from dough portions P, P', P'', ... initially having a substantially spheroidal shape.

In the illustrated embodiment, the line 2 includes a loading station 4 which receives the dough portions P, P', P'', ..., a pressing station 5, a spreading station 6 connected to a downstream calibration station 7 and a finished product unloading station 8.

Nevertheless, it shall be understood that the line 2 may also have a configuration other than that described above, with a larger or smaller number of stations, possibly with different alignments according to particular processing requirements.

The machine 1 of the invention may be located at the spreading station 6 to turn the dough portions P, P', P'', ..., possibly pressed to disks beforehand, into semifinished or finished products with desired thickness and diameter.

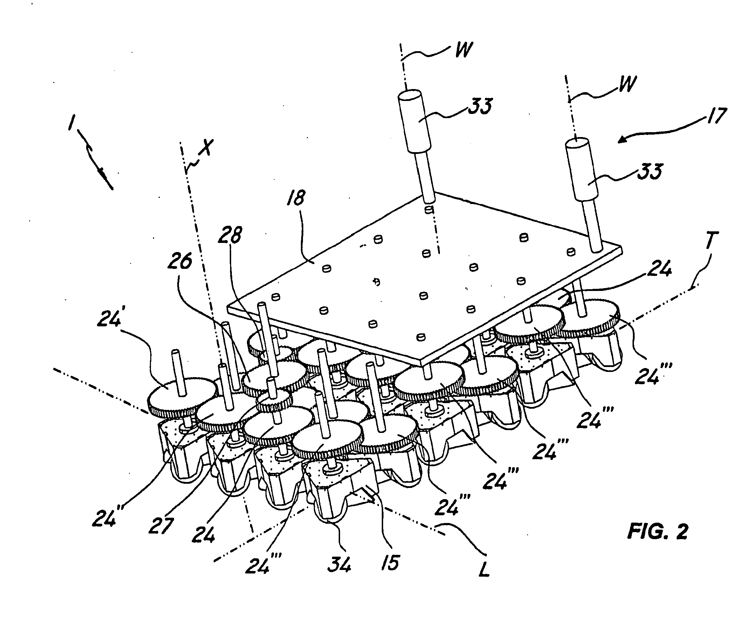

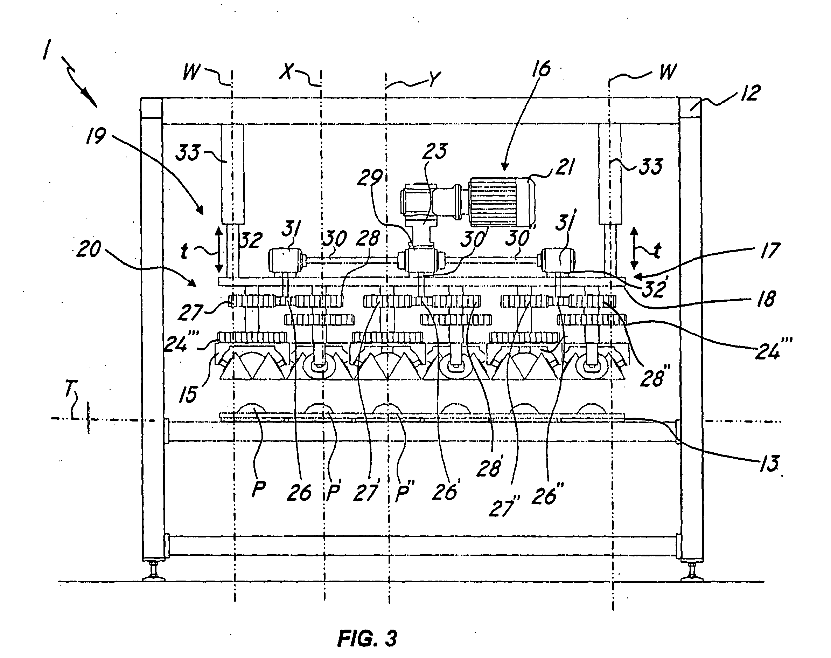

As shown in Figs. 2 and 3, the machine 1 of the invention comprises a bearing frame 12 with a movable or stationary work surface adapted to support a plurality of dough portions P, P', P'', ..., to be processed. The work surface 13 may be equipped with a belt conveyor 11 for feeding the dough portions P, P', P'', ....

The machine 1 further has one or more sets 14 of processing heads 15 located above the work surface 13 and susceptible of interacting with the dough portions P, P', P'', ..., by a rotary movement ω̅ about respective axes X and/or a translational movement t towards/away from the surface.

For clarity, numeral 15 only designates one of the processing heads, although all the components mentioned below will be present in a substantially identical manner in all the other processing heads.

The rotary movement ω̅ will be imparted to the heads 15 by first motor means 16 operatively associated with the processing heads 15, whereas second motor means 17 are designed to impart the translational movements, schematically designated by the double-pointed arrows t, preferably in a vertical direction W.

According to a peculiar feature of the invention, all the processing heads 15 in the set 14 are supported by a plate 18 or the like associated with the frame 12, with the first and second motor means 16, 17 being also connected thereto.

The plate 18 may be part of a box-like body, not shown, open at its bottom to define a protective shield for all the processing heads 15, but it may be replaced by any other structure acting as a support for the processing heads 15.

According to another peculiar feature of the invention, synchronization means 19 are associated with the plate 18 or the like for synchronized transmission of the rotary ω̅ and/or translational t motion from the first and second motor means 16, 17 to all the heads 15 possibly provided in the set 14.

By this arrangement, synchronized rotary ω and/or translational t movements may be imparted to all the heads 15 to cause them to have substantially identical working movements, characterized by substantially coincident angular velocities, excepting the sign, to provide uniform processing of the dough portions P, P', P", ....

The synchronization means 19 include a kinematic connection 20 that connects the first motor means 16 to each processing head 15.

Furthermore, the first motor means 16 include a single motor 21, possibly of known type, which has a drive shaft at its output, possibly with a gearmotor or another kinematic transmission 23 interposed therebetween, and possibly connected, via the kinematic connection 20, to the axis of rotation X of each processing head 15, to impart respective synchronized rotations ω thereto in response to the rotation of the drive shaft only.

It will be appreciated that such configuration affords with time both considerable power savings and reduced space requirements for the machine 1, which will also exhibit a simpler construction.

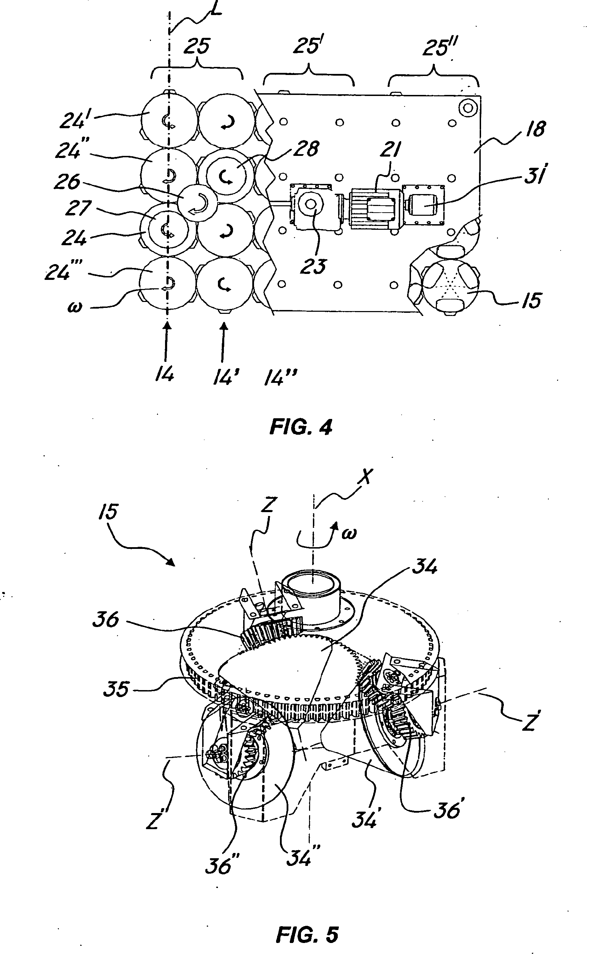

As more clearly shown in Fig. 4, the processing heads 15 may be arranged in a plurality of sets 14, 14', 14", ... of processing heads 15, six in the example of the figures, which are offset in a direction transverse to the longitudinal direction of feed L of the dough portions P, P', P", ... along the machine 1 and/or the line 2.

Each set 14, 14', 14", ..., will in turn be composed of a predetermined number of processing heads 15, four in this example, which are operatively aligned in the longitudinal direction L.

It shall be understood that the number of sets 14, 14', 14", ..., may be other than that of the example, i.e. theoretically infinite, their alignment may be also other than a transverse alignment, and the number of heads 15 for each of them may be greater or smaller than four and also theoretically infinite.

The kinematic connection 20 comprises, for each head 15, a cogwheel or a crown wheel 24, 24', 24'', 24''' integral and coaxial thereto.

For each transverse set 14, 14', 14'', ... one of the cogwheels or crown wheels 24 may be operatively associated with the drive shaft of the motor 21 via the other components of the kinematic connection 20 to define a first driving wheel, whereas the others will define first driven wheels 24', 24'', 24''' arranged in adjacent positions to act as corresponding first gears.

Furthermore, the first driving and driven wheels 24, 24', 24", 24''' of each set 14 are preferably vertically offset relative to the first driving and driven wheels 24, 24', 24'', 24''' of the adjacent set 14', for further reduction of longitudinal and transverse dimensions.

Once again, for clarity, reference is made in the figures to the heads 15 of one set 14 only, the other sets 14', 14'', ... being assumed to have a structure substantially similar or technically equivalent to the former.

The kinematic connection 20 may be designed with the longitudinal sets 14, 14', 14", ... of heads arranged in pairs of substantially similar synchronized sets. Therefore, in the illustrated example, three pairs of longitudinal sets 25, 25', 25" are provided.

Thus, the kinematic connection 20 may include, for each of the pairs 25, 25', 25", so defined, a second driving cog or crown wheel 26, 26', 26" which will receive motion from the drive shaft , and a pair of second driven wheels 27-7, 27'-28', 27"-28" rotatably driven by the same second driving wheel 26, 26', 26" to form respective gears.

Furthermore, each of the second driven wheels 27, 28; 27', 28'; 27", 28" may have an axis of rotation Y in common with one of the first driving wheels 24, to transmit the rotary motion ω to the latter and hence to all the cogwheel 24', 24", 24"' integral with the heads 15.

The above described configuration will be particularly suitable for cylindrical cogwheels 24, 24', 24", 24"', although it shall be understood that it may be changed according to the particular gearings being used, which may be bevel gears of any other gear of common use, without departure from the scope of the invention.

The drive shaft of the motor 21 may have one end connected to a first transmission joint 29 which will have in turn three first driven shafts 30, 30', 30" at its output to transfer motion from the drive shaft to a corresponding second driving wheel 26, 26', 26".

One or more of the second driving wheels 26, 26', 26" may be connected to the corresponding first driven shaft 30, 30', 30'' via a second transmission joint 31, 31', ... also of known type, which has a second downstream driven shaft 32, 32', ... with the second driving wheels 26, 26'' of the corresponding pair of sets 25, 25', 25'' coaxially mounted thereto.

As shown in the figures, the first lateral driven shaft 30, 30'' have a substantially horizontal axis of rotation, whereas the center axis 30' is substantially vertical and directly connected to the first transmission joint 29.

The second motor means 17 may include one or more actuators 33 connected at one side to the load-bearing frame 12 and at the other to the plate 18, shield or the like, for synchronous translational motion t of the processing heads 15.

The actuators 33 may be of pneumatic, electromechanical, hydraulic or the like type and may have a substantially vertical axis of actuation W. Their motion may be controlled by a logic control unit, not shown, which is designed to control either the machine 1 only or the whole line 2 as a central unit.

Fig. 5 shows a possible configuration of the processing heads 15 which may be spreading heads, each having a plurality of cones 34, 34', 34'', ..., three in the illustrated example, rotating about a substantially vertical axis, which may coincide with the axis X of rotation of its own cog or crown wheel 24, 24', 24'', 24'''. Each cone 34, 34', 34'', ... may also rotate about an inclined axis Z, Z', Z'', ... to interact with a dough portion P, P', P''....

In operation, the drive shaft, which is rotatably supported by the motor 21, will drive into rotation, via the first transmission joint 29, the first two lateral driven shafts 30, 30" and the central driven shaft 30'. The former two will transfer their motion to the shafts 32, 32' of the second lateral driving wheels 26, 26" via the second transmission joints 31, 31', whereas the other may be directly connected to the second central driving wheel 26'.

Each of the second driving wheels 26, 26', 26" will mesh with a pair of second driven wheels 27, 28; 27', 28'; 27", 28" which will in turn rotate a corresponding first driving wheel 24 associated to each set 14.

Each of the latter wheels will in turn drive into rotation the driven cogwheels 24', 24" adjacent thereto and belonging to the same set 14, which will in turn transfer the rotary motion ω to the adjacent driven cog or crown wheels 24"', thereby causing all the processing heads 15 to be rotated.

As shown in Fig. 5, each of the processing heads 14 may have a crown wheel 35 integral with its first driving or driven cogwheel 24, 24', 24", 24"', ... to transmit motion to each cone 34, 34', 34" via a gearing 36, 36', 36" placed at the base of each cone 34, 34', 34".

It shall be noted that the synchronization means 19 and particularly the kinematic connection 20 may be easily changed to fit the number of processing heads 15 being used from time to time.

The above disclosure clearly shows that the machine and line of the invention fulfill the intended objects and particularly meet the purpose of providing a dough processing machine and line which have a remarkably small size and a high throughput as compared with prior art machines and lines.

Due to the particular configuration of the synchronization means 19, all the processing heads 15 provided in the machine of the invention will have respective rotary movements and/or translational movements 7 synchronized and substantially similar to each other excepting the direction of rotation, and ensure high uniformity of the output products.

The machine and line of the invention are susceptible to a number of changes or variants, within the inventive concept disclosed in the appended claims. All the details thereof may be replaced by other technically equivalent parts, and the materials may vary depending on different needs, without departure from the scope of the invention.

While the machine and line have been described with particular reference to the accompanying figures, the numerals referred to in the disclosure and claims are only used for the sake of a better intelligibility of the invention and shall not be intended to limit the claimed scope in any manner.

## Claims

1. A machine for processing food dough, particularly for spreading dough portions (P, P', P", ...) preformed into disks such as pizza bases or the like, comprising:
- a bearing frame (12) with a movable or stationary work plane (13) for supporting a plurality of dough portions (P, P', P"...) to be processed;
- at least one set (14) of processing heads (15) located above said work plane (13) and susceptible of interacting with said dough portions (P, P', P", ...) by a rotary movement (w) about respective axes (X) and/or by a translational movement (t) towards/away from said surface (13);
- first motor means (16) operatively associated with said processing heads (15) for imparting respective rotary movements (ω);
- second motor means (17) operatively associated with said heads (15) for imparting respective translational movements (t);
wherein all the heads (15) in said at least one set (14) are supported by a plate (18) or the like associated to said frame (12), synchronization means (19) being provided which are associated to said plate (18) or the like for the synchronized transmission of motion from said first (16) and said second (17) motor means to all the heads (15) of said set (14), said synchronization means (19) including a kinematic connection (20) which connects said first motor means (16) to each of said processing heads (15); and further
wherein said first motor means (16) have at least one drive shaft at their output, said kinematic connection (20) being designed to operatively connect said at least one drive shaft to each of said processing heads (15) and impart respective synchronized rotations (w) thereto in response to the rotation of said drive shaft, said kinematic connection (20) including a cogwheel or a crown wheel (24, 24', 24", 24"') for each head (15) of said set (14), one of which wheels being operatively associated with said drive shaft to defining a first driving wheel, the others defining first driven cogwheels or crown wheels operatively associated with the cogwheels of the adjacent processing heads (15) in said set (14) to act as corresponding gears.

2. Machine as claimed in claim 1, **characterized in that** the heads (15) of said set (14) are operatively aligned in a substantially horizontal longitudinal direction (L).

3. Machine as claimed in claim 2, **characterized in that** it comprises a pair (25) of said longitudinal sets (14) of processing heads (15), the sets of said pair (25) being offset along a substantially horizontal transverse direction (T).

4. Machine as claimed in claim 3, **characterized in that** said kinematic connection (20) includes a second cogwheel or crown wheel (26) operatively associated to said drive shaft and a pair of second driven cog or crown wheels (27, 28) coupled to said second driving wheel (26) to act as second gears, and to a corresponding first driving wheel (24, 24') of a respective series (14) of said processing heads (15).

5. Machine as claimed in claim 4, **characterized in that** each of said second driven wheels (27, 28) is coaxial with a corresponding first driving wheel (24) of a respective one of said sets (14) of processing heads (15).

6. Machine as claimed in one or more of the preceding claims, **characterized in that** it comprises a plurality of said longitudinal sets (14) of processing heads (15), which are mutually offset along said transverse direction (T) to define a plurality of operatively associated pairs of sets (25, 25', 25", ...).

7. Machine as claimed in claim 6, **characterized in that** each of said pairs of sets (25, 25', 25", ...) of processing heads (15) comprises a pair of said first driving wheels (24) coupled to a plurality of said first driven wheels (24', 24", ...), a second driving wheel (26, 26', 26", ...) operatively associated with said drive shaft and a pair of second driven wheels (27, 28; 27', 28'; 27", 28"; ...) operatively coupled to one of said second driving wheels (26, 26', 26", ...).

8. Machine as claimed in one or more of the preceding claims, **characterized in that** said kinematic connection (20) comprises a first transmission joint (29) for connection of said drive shaft to each of said second driving wheels (26, 26', 26", ...), said first transmission joint (29) being connected at its input to said drive shaft of said first motor means (21) and at its output to a plurality of first driven shafts (30, 30', 30", ...) operatively associated with a corresponding second driving wheel (26, 26', 26", ...).

9. Machine as claimed in claim 8, **characterized in that** one or more of said second driving wheels (26, 26', 26", ...) is mounted to a second driven shaft (32, 32', ...) driven by a corresponding first driven shaft (30, 30', ...) via a second transmission joint (31, 31', ...).

10. Machine as claimed in one or more of the preceding claims, **characterized in that** said second motor means (17) comprise at least one actuator (33) connected to said load-bearing frame (12) and to said plate (18) or the like for synchronous translational motion (t) of said processing heads (15).

11. Machine as claimed in one or more of the preceding claims, **characterized in that** said processing heads (15) are spreading heads, each having a plurality of cones (34, 34', 34", ...) rotating about a substantially vertical axis (X), each of said cones (34, 34', 34", ...) also rotating about respective inclined axes (Z, Z', Z", ...) to interact with a dough portion (P, P', P", ...).

12. A line for processing dough, particularly for forming dough disks, such as pizza bases or the like, comprising:
- an input (3) for a plurality of dough portions (P, P', P"...) to be processed;
- one or more stations (4, 5, 6, 7, 8) for processing the dough portions (P, P', P", ...), at least one of said stations (4, 5, 6, 7, 8) being a machine as claimed in one or more of the preceding claims;
- an output (9) for the processed dough portions (P, P', P", ...),
- means (10) for feeding said dough portions (P, P', P"...) from said input (3) to said output (9).

## Patentansprüche

1. Eine Maschine zum Verarbeiten von Lebensmittelteig, insbesondere zum Streuen von Teigportionen (P, P ', P", ...) zu Scheiben wie Pizzaböden oder dergleichen vorgeformt, umfassend:
- Einen Tragrahmen (12) mit einem beweglichen oder stationären Arbeitsebene (13) zum Tragen einer Vielzahl von Teigportionen (P, P ', P" ...) verarbeitet werden sollen;
- Wenigstens einem Satz (14) von Bearbeitungsköpfen (15), die oberhalb der Arbeitsebene (13) und anfällig für die Interaktion mit der Teigportionen (P, P ', P", ...) durch eine Drehbewegung (ω) um jeweilige Achsen (X) und / oder durch eine Translationsbewegung (T) in Richtung auf / weg von der genannten Oberfläche (13);
- Erste Motormittel (16) in Wirkverbindung mit der Bearbeitungsköpfe (15) zum Verleihen jeweiligen Drehbewegungen (ω);
- Zweite Motormittel (17) in Wirkverbindung mit der Köpfe (15) zum Verleihen jeweiligen Translationsbewegungen (t),
wobei alle Köpfe (15) in dem wenigstens einen Satz (14) durch eine Platte (18) gestützt oder dergleichen solidal mit dem Rahmen (12), Synchronisationseinrichtungen (19) versehen ist, die assoziiert sind mit der Platte (18) oder dergleichen für die synchronisierte Übertragung der Bewegung von der ersten (16) und dem zweiten (17) Motormittel an alle Köpfe (15) des Satzes (14), Synchronisationseinrichtungen (19) eine kinematische Kette (20), den ersten Motor (16) wird an jede der gekennzeichnet Bearbeitungsköpfe (15),
die erste Motoreinrichtung (16) über mindestens eine Antriebswelle (22) an ihrem Ausgang, **dadurch gekennzeichnet**, **dadurch gekennzeichnet**, die kinematische Kette (20) dazu bestimmt ist, im Betrieb die mindestens eine Antriebswelle (22) zu jeder der Bearbeitungsköpfe (15) und zur Mitteilung jeweiligen synchronisierten Drehungen (ω) daran in Reaktion auf die Drehung der Antriebswelle (22), die kinematische Kette (20) ein Zahnrad oder ein Kronenrad (24, 24 ', 24", 24"') für jeden Kopf (15) des Satzes (14) der , von denen Rädern betriebsmäßig verbunden ist mit der Antriebswelle (22), um einen ersten Antriebsrad, wobei die anderen, die erste angetriebene Zahnräder oder Kegelräder operativ mit den Zahnrädern der benachbarten Bearbeitungsköpfe (15) im zugehörigen Satz (14) als entsprechende Zahnräder wirken.

2. Maschine nach Anspruch 1, **dadurch gekennzeichnet, daß** die Köpfe (15) des Satzes (14) operativ in einer im wesentlichen horizontalen Längsrichtung (L) ausgerichtet ist.

3. Maschine nach Anspruch 2, **dadurch gekennzeichnet, dass** sie ein Paar (25) der Längsträger umfasst Gruppen (14) von Bearbeitungsköpfen (15), wobei die Sätze des Paars (25) entlang einer im wesentlichen horizontalen Querrichtung (T) versetzt sind.

4. Maschine nach Anspruch 3, dadurch dass die kinematische Kette (20) ein zweites Zahnrad oder Zahnkranz (26) operativ verbunden mit der Antriebswelle (22) und ein Paar von zweiten angetriebenen Zahnrad oder Tellerräder (27, 28) **dadurch gekennzeichnet** mit dem zweiten Antriebsrad (26) als das zweite Zahnrad zu wirken und eine entsprechende erste Antriebsrad (24, 24 ') einer jeweiligen Reihe (14) der Bearbeitungsköpfe (15).

5. Maschine nach Anspruch 4, **dadurch gekennzeichnet, daß** jede der zweiten angetriebenen Räder (27, 28) koaxial mit einer entsprechenden ersten Antriebsrad (24) einer jeweiligen einen der Sätze (14) der Bearbeitungsköpfe (15).

6. Maschine nach einem oder mehreren der vorhergehenden Ansprüche, **dadurch gekennzeichnet, dass** sie eine Vielzahl der genannten Längs-Sets (14) von Bearbeitungsköpfen (15), die zueinander versetzt sind entlang der Querrichtung (T), eine Mehrzahl von betriebsmäßig definieren umfasst zugeordnete Paare von Sätzen (25, 25 ', 25", ..).

7. Maschine nach Anspruch 6, **dadurch gekennzeichnet, daß** jedes der Paare von Sätzen (25, 25 ', 25", ...) der Bearbeitungsköpfe (15) ein Paar von ersten Antriebsrädern (24), um ein gekoppeltes mehrere der ersten angetriebenen Räder (24 ', 24", ...), einen zweiten Antriebsrad (26, 26', 26", ...) in Wirkverbindung mit der Antriebswelle (22) und ein Paar von zweite angetriebene Räder (27, 28, 27 ', 28', 27", 28", ...) wirksam mit einer der gekoppelten zweiten Antriebsräder (26, 26 ', 26", ...).

8. Maschine nach einem oder mehreren der vorhergehenden Ansprüche, **dadurch gekennzeichnet, dass** die kinematische Kette (20) ein erstes Antriebsgelenk (29) zur Verbindung der Antriebswelle (22) zu jedem der genannten zweiten Antriebsräder (26, 26 ', 26", ...), wobei die erste Antriebsgelenkkörper (29) an seinem Eingang mit der Antriebswelle (22) der ersten Motormittel (21) und an seinem Ausgang mit einer Vielzahl von ersten angetriebenen Wellen (30 , 30 ', 30", ...), die operativ mit einem entsprechenden zweiten Antriebsrad (26, 26 zugeordnet', 26", ...).

9. Maschine nach Anspruch 8, **dadurch gekennzeichnet, dass** eine oder mehrere der zweiten Antriebsräder (26, 26 ', 26", ...) mit einer zweiten angetriebenen Welle angebracht ist (32, 32' dadurch, ...) angetriebenen durch einen entsprechenden ersten angetriebenen Welle (30, 30 ', ...) über ein zweites Antriebsgelenk (31, 31', ...).

10. Maschine nach einem oder mehreren der vorhergehenden Ansprüche, **dadurch gekennzeichnet, daß** die zweite Motoreinrichtung (17) wenigstens einen Aktuator (33) verbunden ist, an dem Traggestell (12) und an der Platte (18) oder dgl. für synchrone Translationsbewegung (t) der Bearbeitungsköpfe (15).

11. Maschine nach einem oder mehreren der vorhergehenden Ansprüche, **dadurch gekennzeichnet, dass** die Bearbeitungsköpfe (15) breiten sich Köpfe, die jeweils eine Vielzahl von Zapfen (34, 34 ', 34", ...), der um eine im wesentlichen vertikale Achse (X), wobei jeder der Zapfen (34, 34 ', 34", ...) auch eine Drehung um jeweilige geneigte Achsen (Z, Z', Z", ...) mit einer Teigportion interagieren (P, P ', P ", ...).

12. Eine Linie zur Verarbeitung Teig, insbesondere zur Bildung Teigscheiben wie Pizzaböden oder dergleichen, umfassend:
- einen Eingang (3) für eine Mehrzahl von Teigportionen (P, P ', P" ...) zu verarbeitenden;
- Eine oder mehrere Stationen (4, 5, 6, 7, 8) zur Verarbeitung der Teigportionen (P, P ', P", ...), wobei mindestens eine der Stationen (4, 5, 6, 7 , 8) ist eine Maschine nach einem oder mehreren der vorhergehenden Ansprüche;
- Einen Ausgang (9) für den verarbeiteten Teigportionen (P, P', P", ...),
- Mittel (10) zum Zuführen der Teigportionen (P, P ', P" ...) von dem Eingang (3) mit dem Ausgang (9).

## Revendications

1. Une machine de traitement de pâte alimentaire, en particulier pour l'épandage de portions préformés de pâte (P, P ', P", ...) en disques, tels que les bases de pizza ou similaire, comprenant:
- un châssis de support (12) avec un plan de travail mobile ou fixe (13) pour supporter une pluralité de portions de pâte (P, P ', P", ...) à traiter;
- au moins un ensemble (14) de têtes de traitement (15) situé au-dessus dudit plan de travail (13) et susceptible de coopérer avec lesdites portions de pâte (P, P ', P", ...) par un mouvement de rotation (ω) autour des axes respectifs (X) et/ou par un mouvement de translation (t) vers/à distance de ladite surface (13);
- un premier moyen moteur (16) fonctionnellement associé à ladite tête de traitement (15) pour conférer des mouvements de rotation respectifs (ω);
- un second moyen moteur (17) fonctionnellement associés à ladite tête (15) pour conférer des mouvements de translation respectifs (t);
dans laquelle toutes les têtes (15) dans ledit au moins un ensemble (14) sont supportés par une plaque (18) ou similaire associée sur ledit châssis (12), un moyen de synchronisation (19) étant prévu qui est associé à ladite plaque (18) ou similaire pour la transmission synchronisée du mouvement à partir dudit premier (16) et dudit second (17) moyen moteur à toutes les têtes (15) dudit ensemble (14), lesdits moyens de synchronisation (19) comprenant une chaîne cinématique (20) qui relie ledit premier moyen moteur (16) à chacune desdites têtes de traitement (15); et an outre
dans laquelle ledit premier moyen moteur (16) présent au moins un arbre d'entraînement à leur sortie, ladite chaîne cinématique (20) étant destiné à connecter fonctionnellement ledit au moins un arbre d'entraînement à chacune desdites têtes de traitement (15) et de communiquer des rotations synchronisées respectifs (ω) à eux mêmes en réponse à la rotation dudit arbre d'entraînement, ladite chaîne cinématique (20) comprenant une roue dentée ou une roue de couronne (24, 24', ', 24", 24"') pour chaque tête (15) dudit ensemble (14), une de ces roues étant associée de manière opérationnelle avec ledit arbre d'entraînement (22) pour définir une première roue d'entraînement, les autres définissant premières roues dentées ou roues couronne entraînées fonctionnellement associées aux roues dentées des têtes de traitement adjacentes (15) dans ledit ensemble (14) pour agir en tant que roues dentées correspondantes.

2. Machine selon la revendication 1, **caractérisé en ce que** les têtes (15) dudit ensemble (14) sont fonctionnellement alignés dans une direction sensiblement horizontale longitudinale (L).

3. Machine selon la revendication 2, **caractérisé en ce qu'**elle comprend une paire (25) desdits ensembles longitudinaux (14) des têtes de traitement (15), les ensembles de ladite paire (25) étant décalés le long d'une direction sensiblement horizontale transversale (T).

4. Machine selon la revendication 3, **caractérisé en ce que** ladite chaîne cinématique (20) comprend une deuxième roue dentée ou couronne dentée (26) associée de manière opérationnelle audit arbre d'entraînement (22) et une paire de roue dentée entraînée ou seconde couronnes dentées (27, 28) couplée à ladite deuxième roue d'entraînement (26) pour agir en tant que deuxième engrenages, et à une première roue d'entraînement correspondante (24, 24') d'une série respective (14) desdites têtes de traitement (15).

5. Machine selon la revendication 4, **caractérisé en ce que** chacune desdites secondes roues motrices (27, 28) est coaxiale avec une première roue motrice correspondante (24) de l'un respectif desdits ensembles (14) de têtes de traitement (15).

6. Machine selon l'une ou plusieurs des revendications précédentes, **caractérisé en ce qu'**il comprend une pluralité desdits ensembles longitudinaux (14) des têtes de traitement (15), qui sont mutuellement décalées le long de ladite direction transversale (T) pour définir une pluralité de paires d'ensembles (25, 25 ', 25", ...) associés de manière opérationnelle.

7. Machine selon la revendication 6, **caractérisé en ce que** chacune desdites paires d'ensembles (25, 25', 25", ...) de têtes de traitement (15) comprend une paire desdites premières roues d'entraînement (24) couplées à une pluralité desdites premières roues entraînées (24', 24", ...), une seconde roue d'entraînement (26, 26', 26", ...) associée de manière opérationnelle avec ledit arbre d'entraînement (22) et une paire de secondes roues entraînées (27, 28, 27', 28', 27", 28"; ...) couplé de manière opérationnelle à l'une desdites secondes roues d'entraînement (26, 26 26", ...).

8. Machine selon l'une ou plusieurs des revendications précédentes, **caractérisé en ce que** ladite chaîne cinématique (20) comprend un premier joint de transmission (29) pour le raccordement de l'arbre d'entraînement (22) à chacune desdites secondes roues d'entraînement (26, 26', 26", ...), ledit premier joint de transmission (29) étant connecté à son entrée à l'arbre d'entraînement (22) dudit premier moyen de moteur (21) et en sortie à une pluralité de premiers arbres de sortie (30 , 30 ', 30", ...) associé de manière opérationnelle avec une seconde roue d'entraînement correspondante (26, 26', 26", ...).

9. Machine selon la revendication 8, **caractérisé en ce que** une ou plusieurs desdites secondes roues d'entraînement (26, 26', 26", ...) est monté sur un second arbre de sortie (32, 32', ...) entraînée par un premier arbre entraîné correspondant (30, 30', ...) par l'intermédiaire d'un second joint de transmission (31, 31', ...).

10. Machine selon l'une ou plusieurs des revendications précédentes, **caractérisé en ce que** ledit second moyen moteur (17) comprend au moins un actionneur (33) relié audit châssis de support (12) et à ladite plaque (18) ou similaire pour obtenir un mouvement de translation synchrone (t) desdites têtes de traitement (15).

11. Machine selon l'une ou plusieurs des revendications précédentes, **caractérisé en ce que** lesdites têtes de traitement (15) sont des têtes d'épandage, chacune ayant une pluralité de cônes (34, 34', 34", ...) tournant autour d'un axe (X) sensiblement vertical, chacun desdits cônes (34, 34 ', 34", ...) étant également en rotation autour d'axes inclinés respectifs (Z, Z', Z", ...) pour interagir avec une portion de la pâte (P, P ', P ", ...).

12. Une ligne de traitement de pâte alimentaire, en particulier pour former disques de pâte alimentaire, comme les bases de pizza ou similaires, comprenant:
- une entrée (3) pour une pluralité de portions de pâte (P, P ', P", ...) à traiter;
- une ou plusieurs stations (4, 5, 6, 7, 8) pour traiter les portions de pâte (P, P ', P", ...), au moins une desdites stations (4, 5, 6, 7 , 8) étant une machine selon l'une ou plusieurs des revendications précédentes;
- une sortie (9) pour les portions de pâte traitées (P, P ', P", ...),
- un moyen (10) pour amener lesdites portions de pâte (P, P ', P", ...) de ladite entrée (3) à ladite sortie (9).
